# EUROPÄISCHE PATENTSCHRIFT

(11) **EP 1 794 946 B1**
(45) Veröffentlichungstag und Bekanntmachung des Hinweises auf die Patenterteilung: **11.08.2010**
(21) Anmeldenummer: 05794595.8
(22) Anmeldetag: 06.09.2005
(51) Int. Cl.: H04L 12/56

(54) **SELBSTADAPTIERENDES BANDBREITENMANAGEMENT**
SELF-ADAPTING BANDWIDTH MANAGEMENT
GESTION DE LARGEUR DE BANDE A AUTO-ADAPTATION

(30) Priorität: 21.09.2004 DE 102004045740
(43) Veröffentlichungstag der Anmeldung: 13.06.2007
(73) Patentinhaber: Nokia Siemens Networks GmbH & Co. KG, 81541 München (DE)
(72) Erfinder: FRANTZ, Michael, 81737 München (DE)
(86) Internationale Anmeldenummer: PCT/EP2005/054388
(87) Internationale Veröffentlichungsnummer: WO 2006/032608

(56) Entgegenhaltungen:
- EP-A- 1 001 574
- US-B1- 6 285 676
- NAKAGAWA S-I ET AL: "SELF-SIZING NETWORK OPERATION SYSTEMS IN ATM NETWORKS" 1996 IEEE NETWORK OPERATIONS AND MANAGEMENT SYMPOSIUM (NOMS). KYOTO, APR. 15 - 19, 1996, IEEE NETWORK OPERATIONS AND MANAGEMENT SYMPOSIUM (NOMS), NEW YORK, IEEE, US, Bd. VOL. 2 SYMP. 5, 15. April 1996 (1996-04-15), Seiten 563-572, XP000634820 ISBN: 0-7803-2519-2

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB genannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Des weiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse bewirkt, die beispielsweise als Netzelement (NE), Operations System (OS), Anwendung (= Applikation), Terminal, Router, Switch, Datenbankserver oder Computerprogramm (d.h. genauer: Computerprogrammerzeugnis = (engl.) "computer program product") ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentralisiert ist, während die NE in dem Netz dezentral auf eine Vielzahl von Standorten verteilt sind.

Zwischen NE und OS kann ein Data Communication Networks (DCN) zur Übermittlung von Informationen vorgesehen sein. Die Übermittlung folgt den Prinzipien des Transportdienstes, so wie er in den unteren Schichten des ISO/OSI Referenzmodells im internationalen Standard X.200 beschrieben ist.

Ein OS kann mehrere Programme - auch Applikationen oder Software genannt - umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezifische Teilmenge der Resourcen des Netzes modelliert, visualisiert und gesteuert wird.

Die Programme werden von Hardware (z.B. Prozessor, i/o Baugruppe) ausgeführt, die in den Erzeugnissen vorgesehen ist. Diese Ausführung wird von Supportsoftware (z.B. Multitasking bzw. Multithreading Betriebssystem, Datenbanksystem, Windows System) unterstützt.

Die Configuration Funktionalität des Kommunikationsnetzes sieht z.B. vor, dass mit Hilfe des OS in den Netzelementen Kanäle (auch Pfad, Trail, Channel, Verbindung oder Service genannt) eingerichtet und verwaltet werden. Diese Kanäle werden häufig schritt- und dabei oft sogar schichtweise eingerichtet, indem zunächst Kanäle einer unteren Schicht (z.B. SDH Trail, ATM VP [= Virtual Path]) geschaltet werden, in die dann Kanäle einer höheren Schicht (z.B. Ethernet Service, ATM VC [= Virtual Channel]) eingefügt werden. Dabei stehen die Kanäle in einer Client-Server Beziehung, wobei die Kanäle der unteren Schicht als Server-Kanäle und die der oberen Schicht als Client-Kanäle fungieren.

Ein Verfahren zur Organisation mehrerer Kanäle innerhalb eines Kommunikationsnetzes und zur Zuteilung von Bandbreiten zu den einzelnen Kanälen ist beispielsweise aus der US-Patentschrift US 6285676 B1 bekannt. Ein derartige Verfahren ist jedoch ausschließlich in gemäß dem ATM-Standard (Asynchronous Transfer Mode) arbeitenden Netzen anwendbar.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Üblicherweise wird jeder Serverkanal mit einer festen Bandbreite eingerichtet, die so groß gewählt wird, dass eine bestimmte, erwartete, maximale Anzahl von Clientkanälen eingefügt werden kann. Ein Serverkanal, in den dessen maximale Anzahl von Clientkanälen eingefügt ist, ist vollständig belegt. Es können in diesem Fall keine weiteren Clientkanäle in diesen Serverkanal eingefügt werden. Dies gilt auch dann, wenn in anderen Serverkanälen oder grundsätzlich im Kommunikationsnetz noch Kapazität für weitere Clientkanäle vorhanden ist.
- Die Konfiguration derartiger Netze wird von zeitgemäßen Operations Systemen dadurch unterstützt, dass bei der Einrichtung eines neuen Clientkanals diejenigen Serverkanäle ausgewählt und angeboten werden, in noch ausreichend Bandbreite für den neuen Clientkanal aufweisen. Serverkanäle ohne ausreichende (Rest-) Bandbreite werden nicht angezeigt.
- Eine Änderung bzw. Anpassung der Bandbreite eines Serverkanals ist nur mit unverhältnismäßig großer Mühe möglich. Sie erfordert üblicherweise eine De-Installation aller enthaltenen Clientkanäle sowie des bisherigen Serverkanals und anschließend ein Einrichten eines neuen Serverkanals mit der erwünschten, geänderten Bandbreite, in den dann die bisherigen Clientkanäle von neuem eingefügt werden. Während dieser Änderung ist dabei keine Übermittlung von Informationen in den zwischenzeitlich gelöschten Clientkanälen möglich. Es kommt also m.a.W. zu einer temporären Unterbrechung des Verkehrs.
- Eine frühzeitige optimale Dimensionierung der Serverkanäle ist schwierig, da die spätere, tatsächliche Belegung der Serverkanäle oft nicht allzu genau vorhergesagt werden kann. Wenn die Serverkanäle dann während des Betriebs mit einer Vielzahl von Clientkanälen beschaltet sind, ist eine Änderung - wie oben beschrieben - nur mehr sehr eingeschränkt möglich.
- Es ist deshalb eine langjährige, feststehende Regel, dass von einem Operations System keine automatisierte Änderung der Bandbreite von stark belegten Serverkanälen unterstützt wird, sondern diese - wie beschrieben - für die Einrichtung neuer Clientkanäle ggf. nicht mehr ausgewählt und angeboten werden.
- Für SDH Netze wurde bei der ITU-T das Link Capacity Adjustment Scheme (LCAS) entwickelt. Es ist in den ITU-T Empfehlungen G.7042 bzw. Y.1305 sowie deren entsprechenden Folgeempfehlungen beschrieben. LCAS basiert auf virtuell miteinander konkatenierten SDH Trails - auch VCG (= virtual concatenated group) bwz. LcasGroupTrail genannt -, die gemeinsam zur Übermittlung von Informationen dienen und gegenüber den Clientkanälen wie ein homogener Serverkanal wirken. Die einzelnen SDH Trails können dabei auch unterschiedliche Wege durch ein SDH Netz nehmen. LCAS ermöglicht u.a. eine unterbrechungsfreie Erhöhung oder Absenkung der Bandbreite eines LcasGroupTrails. Auch werden Ausfälle einzelner Trails in einem gewissen Rahmen kompensiert, da nicht alle SDH Trails eines VCG zeitgleich aktiv sein müssen.
- Die Auswirkung von Serverkanälen, deren Bandbreite angepasst werden kann, auf das Configuration Management ist bislang offen. Um dies zu erkennen und zu untersuchen, muss von der beschriebenen, bisherigen, langjährigen Vorgehensweise, volle Serverkanäle nicht weiter zu beschalten, abgewichen werden. Bislang wird eine automatische Bandbreitenanpassung durch das Configuration Management nicht unterstützt. Sie muss durch eine zeitaufwändige, fehleranfällige Überwachung und Konfiguration wie oben beschrieben manuell durch den Operator gelöst werden.
- Verfahren wie beispielsweise LCAS sind dazu geeignet, von der bisherigen Standardvorgehensweise abzuweichen und neue Wege bei der Beschaltung von Serverkanälen zu gehen, deren grundsätzlich fest konfigurierte Bandbreite zunächst nicht für die Aufnahme weiterer Clientkanäle ausreicht.

Eine Lösung für diese erfindungsgemäß erkannte Problemsituation sowie vorteilhafte Ausgestaltungen dieser Lösung sind in den Patentansprüchen angegeben.

Die Erfindung wird nachfolgend anhand von Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt:
- Figur 1: eine beispielhafte Anordnung, umfassend ein zentra- les Operations System OS mit Applikationen A zur Steuerung von dezentralen Elementen NE eines Kommu- nikationsnetzes KN
- Figur 2: eine beispielhafte Schichtung von mehreren Kanälen K, wobei die Kanäle K einer höheren Schicht in der jeweils nächst niedrigeren Schicht und die Kanäle meist über mehrere Elemente NE des Kommunikations- netzes KN geführt werden
- Figur 3: einen beispielhaften Serverkanal K₁ eines LCAS Transportsystems, in dem mehrere Clientkanäle K₂ geführt werden
- Figur 4: den beispielhaften Serverkanal K₁ der vorherigen Figur nach einer erfindungsgemäßen Anpassung auf eine neue, in diesem Fall höhere Bandbreite

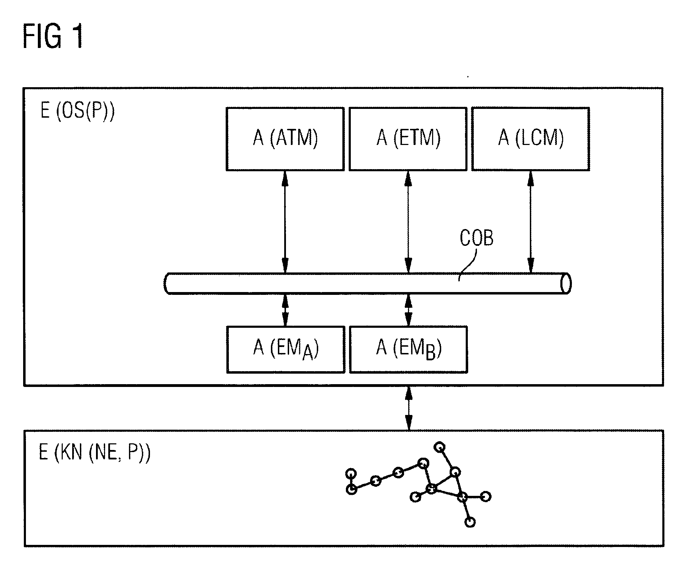

Die Ausführung der Erfindung wird im weiteren auch mit Hilfe der Figur 1 dargestellten, beispielsweisen Anordnung erklärt, die eine Vielzahl von verteilt angeordneten gegenständlichen Erzeugnissen E umfasst. Die Erzeugnisse E sind beispielsweise als dezentral verteilt angeordnete Netzelemente NE_{A}, NE_{B} eines Kommunikationsnetzes KN oder als zentrales Operations System OS mit Applikationen A zur Steuerung der dezentralen Elementen NE des Kommunikationsnetzes KN ausgebildet. Die Applikationen A umfassen beispielsweise eine Applikation ETM (= Ethernet Service Management) zur Verwaltung von Ethernet Clientkanälen, eine Applikation LCM (= LCAS Management) zur Verwaltung von LCAS Serverkanälen oder eine Applikation ATM(= ATM Management) zur integrierten Verwaltung von ATM Server- und Clientkanälen des Kommunikationsnetzes KN.

Die Erzeugnisse E umfassen Hardware - insbesondere Prozessoren und Speichermittel -, mit deren Hilfe insbesondere diejenigen Erzeugnisse E durchgeführt werden, die als Computerprogrammprodukt P bzw. als Programm P ausbildet sind. Die Hardware kann auch unmittelbar den Erzeugnissen E entsprechen, beispielsweise als Application Specific Integrated Circuit (ASIC) oder gleichwertiges gegenständliches Erzeugnis E.

Den als Applikationen A ausgebildeten Erzeugnissen sind üblicherweise die TMN Funktionsblöcke Operations Systems Function (OSF) und Workstation Function (WSF), den als Netzelemente NE ausgebildeten Erzeugnissen der TMN Funktionsblock Network Element Function (NEF) zugeordnet.

Das Operations System OS und die Netzelemente NE sind durch ein in der Fachwelt als Data Communication Network (DCN) bezeichnetes Datennetz verbunden, über das z.B. Befehle zur Anpassung der Bandbreite von Kanälen K übermittelt werden.

Für ein erstes Ausführungsbeispiel der Erfindung sei angenommen, dass das Kommunikationsnetz KN ein als SDH Netz ausgebildetes Transportnetz ist, über das Ethernet Kanäle - auch Ethernet Services genannt - geführt werden.

Das SDH Netz weißt u.a. einen Serverkanal K₁ auf, der als Kanal LCAS ausgebildet ist und entsprechend den Regeln des Link Capacity Adjustment Scheme eine dynamische Anpassung seiner Bandbreite durch Hinzunahme und Wegnahme von als Trails T ausgebildeten Kanälen VC12 erlaubt, mit deren Hilfe die Bandbreite des Kanals LCAS realisiert wird.

Die Ethernet Services haben entweder eine feste Bandbreite (Modus: "stream") oder eine flexible Bandbreite (Modus: "best effort"), wobei letztere u.a. durch eine minimale committed bandwith und eine maximale peak bandwidth gekennzeichnet ist. Zeitgemäße Ethernet Services weisen dabei üblicherweise eine maximale Bandbreite von 100 Mbps (= Kanal 100Base), 1000 Mbps (= Kanal 1000Base) oder 10 Gbps (= Kanal 10GbE) auf.

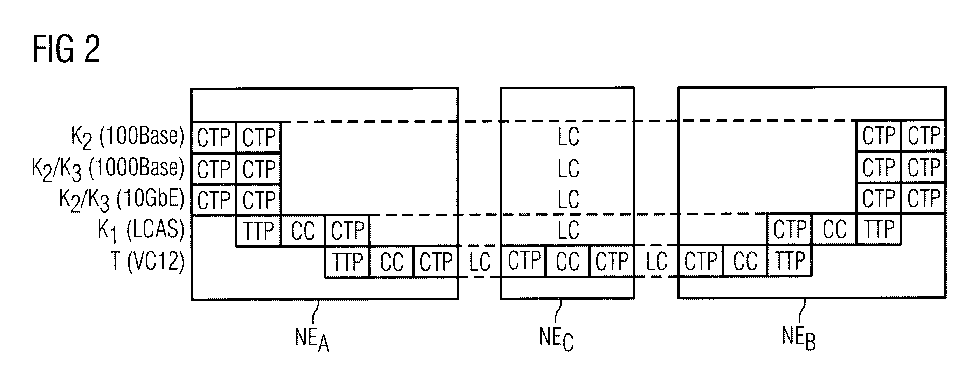

Die Abhängigkeitsverhältnisse zwischen den Kanälen LCAS und VC12 des SDH Netzes und den Ethernet Kanälen 100Base, 1000Base und 10GbE sind in Figur 2 dargestellt. Die Ethernet Services K₂ können dabei jeweils entweder unmittelbar oder mittelbar über die jeweils höherbitratigen Ethernet Services K₃ in dem Kanal LCAS geführt werden. Die Kanäle K₂/K₃ stellen erfindungsgemäße Clientkanäle dar, der Kanal K₁ einen erfindungsgemäßem Serverkanal. Die Clientkanäle werden in dem SDH Netz zwischen den Netzelementen NE_{A}, NE_{B} über eine zwischengeschaltetes Netzelement NE_{C} in den Serverkanal eingefügt übermittelt.

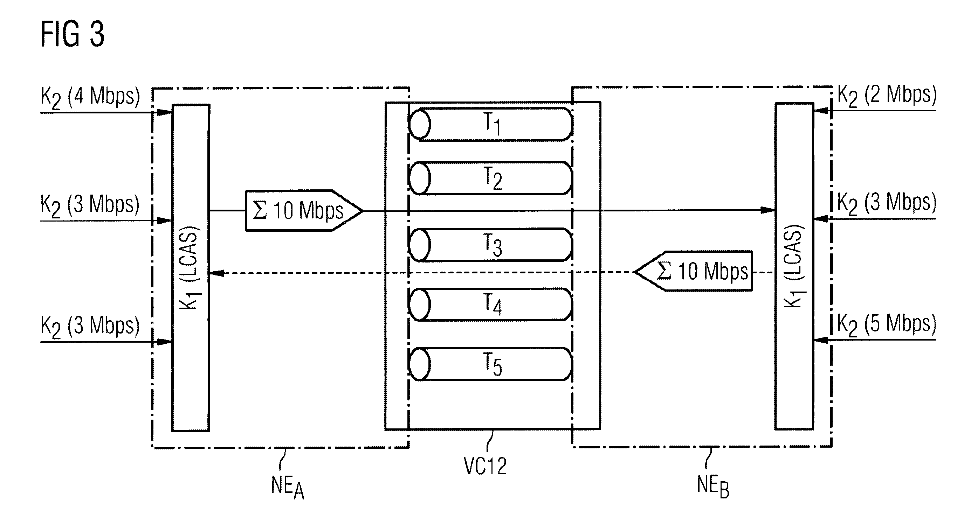

In Figur 3 ist ein konkretes Fallbeispiel dieser Ausführung der Erfindung aufgezeigt. In den Kanal LCAS sind unidirektionale Ethernet Services K₂ eingefügt, wobei sich in beide Übermittlungsrichtungen rein rechnerisch eine erforderliche Bandbreite von 10 Mbps ergibt. Zur Realisierung dieser Bandbreitenanforderung sind dem Kanal LCAS fünf, als Trail T₁ bis T₅ ausgebildete, Kanäle VC12 mit einer jeweiligen Bandbreite von 2 Mbps zugeordnet, so dass der Kanal LCAS die erforderliche Bandbreite von 10 Mbps aufweist. Bei der Übermittlung werden die Ethernet Services K₂ von der Steuerungslogik des Kanals LCAS automatisch auf die fünf Kanäle VC12 verteilt, wobei die Verteilung für die Kanäle K₂ transparent, d.h. für diese nicht erkennbar, vorgenommen wird. Auf die Kanäle K₂ wirkt der Kanal LCAS wie ein einziger, homogener Kanal K₁ mit einer Bandbreite von 10 Mbps. Die Clientkanäle und die Serverkanäle sind hinsichtlich ihrer Bandbreite in diesem Fall optimal aufeinander abgestimmt.

Durch Änderungen der Konfiguration des Kommunikationsnetzes KN kann die Abstimmung der Bandbreiten zwischen Server- und Clientkanälen suboptimal werden. Dies ist beispielsweise dann der Fall, wenn ein Ethernet Service erzeugt, modifiziert oder gelöscht wird, der als Serverkanal einen Kanal LCAS nutzt. Erfindungsgemäß wird eine derartige Situation automatisch erkannt und bewertet. In Abhängigkeit von dem Bewertungsergebnis wird eine automatische Änderung der Bandbreiten initiiert.

Das Erkennen von Triggerbedingungen - auch Ereignis genannt - für eine automatische Bandbreitenanpassung eines Serverkanals kann beispielsweise dadurch bewirkt werden, dass vom Operations System OS die erforderliche Bandbreite für die zu übertragenden Ethernet Services ermittelt und gegen die Bandbreite des verwendeten Serverkanals LCAS überwacht wird. Sollte die erforderliche Bandbreite für die Ethernet Services die aktuelle Bandbreitenkonfiguration des Serverkanals LCAS übersteigen oder die Bandbreite des Serverkanals LCAS nicht komplett benötigt werden, wird die Konfiguration automatisch adaptiert, falls die dazu benötigten Ressourcen vorhanden sind. Für diese Überwachung bzw. Anpassung gelten folgende Optionen:
- Sie wird beispielsweise durch eine Änderung in Hinblick auf die in einem Serverkanal geführten Clientkanäle ausgelöst. Die könnte beispielsweise ein Konfigurationsprozedur sein, der von der Applikation ETH ausgeht. Diese Konfigurationsprozedur könnte beispielsweise das Erzeugen, Ändern oder Löschen eines Ethernet Services sein.
- Es wird ein neue Bandbreite für den betroffenen Serverkanal berechnet. Überschreitet oder unterschreitet die neue Bandbreite bestimmte voreingestellte Grenzwerte, dann wird eine Anpassung der Bandbreite des Serverkanals initiiert. Vorteilhaft wird durch diese Hysterese die Anzahl der Anpassungen der Bandbreite von Serverkanälen reduziert.
- Sie ist konfigurierbar (Ein/Aus pro Kanal LCAS). Damit kann vorteilhaft der QoS der Ethernet Services abgebildet werden - adjust für "stream" und no adjust für "best effort" services.
- Das mögliche Delta (Bandbreite der Fragmentpfade - im Beispiels 2 Mbps pro Kanal VC12), mit dem die Bandbreite angepasst werden kann, wird berücksichtigt.
- Bei der Berechnung der für die Services verfügbaren Bandbreite werden eventuelle Overheads berücksichtigt, die bei der Übermittlung der Services anfallen (z.B. Header der Ethernet Pakete und/oder solche, die nach der Generic Framing Procedure GFP gebildet werden).
- Bei zweiten Kanälen mit flexibel schwankenden Bandbreiten wird die neue Bandbreite zumindest so groß berechnet, dass eine unter Berücksichtung der statistischen Verteilung der Bandbreitenschwankungen ermittelte, wahrscheinliche Verlustrate kleiner oder kleiner gleich ist als eine vorgegebene, wahrscheinliche Verlustrate.
- Es werden Client-Server Beziehungen über mehrere Stufen berücksichtigt. Es wird nicht nur die erforderliche Bandbreite für die direkten, unmittelbaren Clientkanäle überwacht, sondern auch mittelbar über mehrere Client-Server Relations. Beispielsweise kann ein Kanal 100Base unmittelbar in dem Kanal LCAS oder mittelbar über Kanäle 1000Base und/oder 10GbE in dem Kanal LCAS geführt werden. Alternativ (in den Figuren nicht dargestellt) kann ein Kanal LCAS Server sein für einen Gruppenkanal mit sub-channeling gemäß der Generic Framing Procedure, und der Gruppenkanal ist wiederum Serverkanal für die Ethernet Services, so dass der Kanal LCAS und die Ethernet Services lediglich mittelbar in Client-Server Relation zueinander stehen.
- Es wird überprüft, ob für eine gewünschte Anpassung - insbesondere Erhöhung - der Bandbreite eines Kanals noch ausreichend freie Kapazitäten im Kommunikationsnetz KN vorhanden sind. Der Benutzer wird nur gefragt ob die Bandbreite angepasst werden soll, wenn die erforderlichen Resourcen im Netz verfügbar sind.

Im Anschluss an eine derart erkannte und bewerte Triggerbedingung wird die Bandbreite des betroffenen Serverkanals K₁ automatisch von dem Operations System OS angepasst. Diese wird beispielsweise von der Applikation LCM bewirkt. Dabei gelten folgende Optionen:
- Es wird die Anzahl von Kanälen VC12, die für die Bandbreitenanpassung hinzugefügt oder gelöscht werden müssen, ermittelt. Zusätzliche Overheads werden dabei berücksichtigt.
- Es werden die Netzresourcen für beide Enden des Serverkanals LCAS modifiziert. Diese Modifikation wird vorzugsweise über die jeweiligen Elementmanager EM_{A}, EM_{B} bewirkt.
- Neue Kanäle VC12 werden mithilfe des Operations Systems OS geroutet.
- Es werden alle erforderlichen Konfigurationen im Kommunikationsnetz KN aktiviert.
- Es werden Hardwareeinschränkungen berücksichtigt, z.B. die maximal Anzahl der möglichen Kanäle VC12, die von einem Kanal LCAS unterstützt werden, Freie Slots innerhalb eines Kanals VC4 und insbesondere die Reihenfolge, in der die Modifikationen vorgenommen werden müssen.

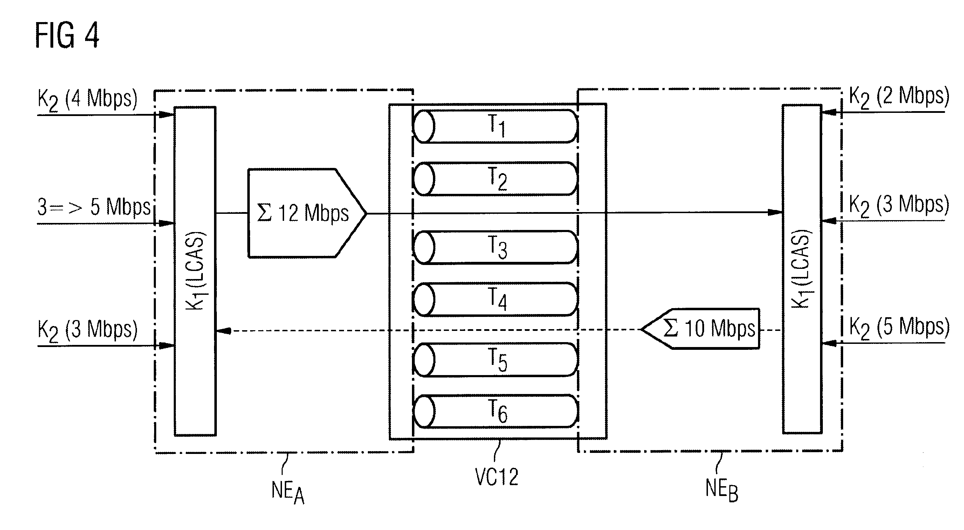

Beispielhaft ist in Figur 4 dargestellt, wie die Konfiguration von Figur 3 im Anschluss an eine derart bewirkte Anpassung der Bandbreite des Kanals LCAS, die durch eine Erhöhung der Bandbreite eines der unidirektionalen Ethernet Services von NE_{A} nach NE_{B} von 3 Mbps auf 5 Mbps ausgelöst wird. Als Konsequenz dieses Ereignisses wird eine erforderliche, neue Bandbreite von 12 Mbps ermittelt und ein Anpassungswunsch bezüglich des Kanals LCAS initiiert. Bei Prüfung des Wunsches wird festgestellt, dass ein zusätzlicher, als Trail T₆ ausgebildeter, Kanal VC12 erforderlich ist. Dieser wird vom Operationssystem in dem Kommunikationsnetz KN geroutet und hinsichtlich der noch verfügbaren Resourcen sowie sonstiger Randbedingungen geprüft. Nach Ermittlung eines positiven Prüfergebnisses wird die Bandbreite des Kanals LCAS um die Bandbreite von Trail T₆ erweitert, indem der neu eingerichtete Trail T₆ dem Kanal LCAS als neuer Serverkanal hinzugefügt wird. Nach Abschluss dieser automatischen Bandbreitenanpassung hat der Kanal LCAS, wie in Figur 4 dargestellt, eine neue Bandbreite von 12 Mbps, die in eine Richtung vollständig und in die umgekehrte Richtung mit 10 Mbps ausgenutzt wird. Zur Vereinfachung des Ausführungsbeispiels sind zu berücksichtigende Overheads (z.B. solche für GFP) nicht dargestellt.

Vorteilhaft wird durch die automatische Bandbreitenanpassung die Abbildung der Flexibilität von Ethernet bzgl. Bandbreite und QoS auf Transportnetze ermöglicht. Besonders schön gelingt dies, wenn die Verwendung der erforderlichen Bandbreite als Trigger für die automatische Erweiterung eines Serverkanals auf nachfolgende Punkte aufbaut:
- Die Definition von Regeln für die Überwachung von erforderlichen und vorhandenen Netzkapazitäten sowie von Triggerbedingungen, die vom Operations System überwacht werden können.
- Die Definition der Abläufe, die vom Managementsystem bei einer Bandbreitenanpassung durchgeführt werden.

Bei einem alternativen Ausführungsbeispiel sind das Kommunikationsnetz KN als ATM Netz, die Clientkanäle als Virtual Connections (VC) und die Serverkanäle als Virtual Path (VP) ausgebildet.

Beim Erzeugen einer neuen VC wird in diesem Beispiel zunächst geprüft, ob bereits ein VP zu dem Ziel der neuen VC eingerichtet ist. Wenn dies nicht der Fall ist, wird ein neuer VP eingerichtet, dessen Bandbreite zumindest so groß gewählt wird, dass der neue VC in dem neuen VP geführt werden kann.

Wenn bereits ein VP besteht, dann wird dessen Bandbreite überprüft. Wenn die Bandbreite nicht ausreicht, um den neuen VC noch in dem VP zu führen, dann wird eine erforderliche, neue Bandbreite für den VP nach den oben ausgeführten Kriterien berechnet. Anschließend wird - vorzugsweise von der Application ATM - für alle betroffenen Netzelementen NE geprüft, ob noch ausreichend Resourcen in dem Kommunikationsnetz KN für eine Erhöhung der Bandbreite des VP vorhanden sind. Diese Prüfung kann sowohl vom Operations System OS, als auch von den Netzelementen NE durchgeführt werden. Wenn das Prüfergebnis positiv ausfällt, wird die Bandbreite des VP in dem ATM Netze auf die neue Bandbreite erhöht.

In beiden Fällen ist anschließend die Bandbreite des VP so groß, dass der neue VC in dem VP geführt werden kann.

Besonders schöne Vorteile ergeben sich hinsichtlich einer möglichst optimalen Nutzung der vorhandenen Netzresourcen, wenn kontinuierlich versucht wird - d.h. schon beginnend mit dem Einrichten eines ersten Clientkanals -, die Bandbreite des Serverkanals möglichst genau der aufsummierten Bandbreite der in ihm geführten Clientkanäle entsprechen zu lassen. Auf diese Weise wird die ungenutzte Kapazität minimiert, die durch bereits angelegte, aber noch nicht voll beschaltete Serverkanäle mit hoher Bandbreite gebunden wird.

Eine Änderung der Bandbreite kann gemäß einer weiteren Variante der Erfindung auch durch eine unmittelbaren Konfigurationsauftrag eines Operators des Kommunikationsnetzes ausgelöst werden. Vorteilhaft muss der Benutzer in diesem Fall lediglich die gewünschte Bandbreite angeben, anstatt alle erforderlichen Konfigurationsschritte manuell vornehmen. Das System berechnet anhand der definierten Regeln, die Anzahl der hinzuzunehmenden/löschenden Kanäle VC12 und führt die erforderlichen Konfigurationen auf Basis der definierten Abläufe automatisch durch.

Mit der Erfindung ist eine Vielzahl von weiteren Vorteilen verbunden:
- Die Ethernet- und Transport-Technologie wird bezüglich Bandbreite und QoS miteinander verbunden.
- Die Bandbreiten werden in dem Kommunikationsnetz optimal genutzt. Es wird weniger Kapazität durch nicht optimal befüllte Serverkanäle gebunden.
- Für einen Netzbetreiber ergeben sich durch Reduktion der OPEX (OPerational EXpenses) wirtschaftliche Vorteile.
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software bzw. als Computerprogrammprodukt realisiert werden kann. Weiterhin ist für den Fachmann klar, dass die Erfindung sowohl durch ein einziges Erzeugnis, von dem die Erfindung vollständig durchgeführt wird, als auch verteilt durch entsprechendes Zusammenwirken mehrerer Erzeugnisse, von denen jeweils Teile der Erfindung durchgeführt werden, realisiert werden kann.

## Patentansprüche

1. Verfahren zur Anpassung der Bandbreite von Übermittlungskanälen eines Kommunikationsnetzes (KN), mit
- zumindest einem Serverkanal (K₁) und
- zumindest einem Clientkanal (K₂), der in dem Serverkanal (K₁) geführt wird,
mit folgenden Schritten:
a) Auftritt eines Anpassungswunsches bezüglich des Serverkanals (K₁) als Reaktion auf zumindest ein, den Wunsch auslösendes Ereignis in Hinblick auf die in dem Serverkanal (K₁) geführten Clientkanäle (K₂);
b) Ermittlung einer passenden neuen Bandbreite unter Berücksichtigung der Clientkanäle (K₂) ;
c) Anpassung der Bandbreite des Serverkanals (K₁),
**dadurch gekennzeichnet,**
**dass** das Kommunikationsnetz (KN) als SDH-Netz ausgebildet ist und die Ermittlung der neuen Bandbreite durch ein als zentrales Operations System ausgebildetes Erzeugnis bewirkt wird.

2. Verfahren nach einem der vorstehenden Ansprüche, bei dem der Anpassungswunsch durch Einfügen in oder Entnehmen eines Clientkanals (K₂) aus dem Serverkanal (K₁) ausgelöst wird.

3. Verfahren nach einem der vorstehenden Ansprüche, bei dem bei Erzeugen eines neuen Clientkanals (K₂) zunächst geprüft wird, ob bereits ein passender Serverkanal (K₁) in dem Kommunikationsnetz (KN) existiert, der zu dem Ziel des neuen Clientkanals (K₂) führt, in dem der neue Clientkanal (K₂) geführt werden könnte, und, falls nicht, ein neuer Serverkanal (K₁) zu diesem ziel eingerichtet wird, in dem anschließend der neue Clientkanal (K₂) geführt wird.

4. Verfahren nach einem der vorstehenden Ansprüche, bei dem zumindest ein Teil der Clientkanäle (K₂) in dem Serverkanal (K₁) mittelbar geführt wird, indem der Teil unmittelbar in einen dritten Kanal (K₃) und dieser in dem Serverkanal (K₁) geführt wird, wobei sich diese Mittelbarkeit auch über mehrere Stufen von jeweils ineinander geführten dritten Kanälen erstrecken kann.

5. Verfahren nach einem der vorstehenden Ansprüche, bei dem bei der Ermittlung der neuen Bandbreite für einen Clientkanal (K₂) wahlweise eine flexibel schwankende Bandbreite oder eine konstante Bandbreite berücksichtigt wird.

6. Verfahren nach einem der vorstehenden Ansprüche, bei dem bei einer Erhöhung der Bandbreite des Serverkanals (K₁) geprüft wird, ob in dem Kommunikationsnetz (KN) noch ausreichend freie Ressourcen zur Anpassung der Bandbreite des Serverkanals (K₁) vorhanden sind.

7. Erzeugnis, umfassend Mittel zur Durchführung aller Schritte eines Verfahrens nach einem der vorstehenden Verfahrensansprüche.

8. Erzeugnis, umfassend Mittel zur Durchführung der von dem Erzeugnis bewirkten Schritte eines Verfahrens nach einem der vorstehenden Verfahrensansprüche, die so eingerichtet sind, dass durch Zusammenwirkung mit zumindest einem weiteren derartigen Erzeugnis, dessen Mittel zur Durchführung der restlichen Schritte des Verfahrens eingerichtet sind, alle Schritte des Verfahrens durchgeführt werden.

9. Erzeugnis nach einem der beiden vorstehenden Ansprüche, ausgebildet als Computerprogrammprodukt (P), dessen Programmcode zur Durchführung des Verfahrens von zumindest einem Prozessor ausgeführt wird.

## Claims

1. Method for customizing the bandwidth of transmission channels in a communication network (KN), having
- at least one server channel (K₁) and
- at least one client channel (K₂), which is routed in the
server channel (K₁),
having the following steps:
a) a customization request for the server channel (K₁) appears in response to at least one event, triggering the request, in respect of the client channels (K₂) routed in the server channel (K₁) ;
b) a suitable new bandwidth is ascertained taking account of the client channels (K₂) ;
c) the bandwidth of the server channel (K₁) is customized, **characterized**
**in that** the communication network (KN) is in the form of an SDH network, and the ascertainment of the new bandwidth is prompted by a product which is in the form of a central operations system.

2. Method according to one of the preceding claims,
in which the customization request is triggered by inserting or removing a client channel (K₂) into/from the server channel (K₁) .

3. Method according to one of the preceding claims,
in which production of a new client channel (K₂) first of all involves a check to determine whether a suitable server channel (K₁) already exists in the communication network (KN) and leads to the destination of the new client channel (K₂) in which the new client channel (K₂) could be routed, and, if not, a new server channel (K₁) is set up to this destination, in which the new client channel (K₂) is subsequently routed.

4. Method according to one of the preceding claims,
in which at least a portion of the client channels (K₂) is routed in the server channel (K₁) indirectly by virtue of the portion being routed into a third channel (K₃) directly and the latter being routed in the server channel (K₁), wherein said indirectness can also extend over a plurality of stages of respective third channels routed into one another.

5. Method according to one of the preceding claims,
in which the ascertainment of the new bandwidth for a client channel (K₂) involves either a flexibly varying bandwidth or a constant bandwidth being taken into account.

6. Method according to one of the preceding claims,
in which an increase in the bandwidth of the server channel (K₁) involves a check to determine whether the communication network (KN) still contains sufficient free resources for customizing the bandwidth of the server channel (K₁).

7. Product, comprising means for performing all the steps of a method according to one of the preceding method claims.

8. Product, comprising means for performing those steps of a method according to one of the preceding method claims which are prompted by the product, said means being set up such that interaction with at least one further such product, the means of which are set up to perform the remaining steps of the method, performs all the steps of the method.

9. Product according to one of the two preceding claims, in the form of a computer program product (P), the program code of which is executed by at least one processor in order to perform the method.

## Revendications

1. Procédé d'adaptation de la largeur de bande de canaux de transmission d'un réseau de communication (KN) avec
- au moins un canal serveur (K₁) et
- au moins un canal client (K₂) qui passe dans le canal serveur (K₁),
comportant les étapes suivante
a) survenance d'une demande d'adaptation concernant le canal serveur (K₁) en réaction à au moins un événement déclenchant la demande en relation les canaux clients (K₂) qui passent dans le canal serveur (K₁),
b) détermination d'une nouvelle largeur de bande adéquate compte tenu des canaux clients (K₂),
c) adaptation de la largeur de bande du canal serveur (K₁),
**caractérisé en ce que**
le réseau de communication (KN) se présente sous la forme d'un réseau SDH et la détermination de la nouvelle largeur de bande est provoquée par un produit réalisé en tant que système opérationnel central.

2. Procédé selon l'une des revendications précédentes, dans lequel la demande d'adaptation est déclenchée par insertion ou retrait d'un canal client (K₂) dans le ou hors du canal serveur (K₁).

3. Procédé selon l'une des revendications précédentes, dans lequel il est tout d'abord vérifié, à la création d'un nouveau canal client (K₂), s'il existe déjà, dans le réseau de communication (KN), un canal serveur adéquat (K₁) qui mène à la destination du nouveau canal client (K₂), dans lequel le nouveau canal client (K₂) pourrait passer et, sinon, un nouveau canal serveur (K₁) vers cette destination est créé, dans lequel passe ensuite le nouveau canal client (K₂).

4. Procédé selon l'une des revendications précédentes, dans lequel au moins une partie des canaux clients (K₂) passent indirectement dans le canal serveur (K₁) du fait que cette partie passe directement dans un troisième canal (K₃) et que celui-ci passe dans le canal serveur (K₁), ce caractère indirect pouvant également s'étendre sur plusieurs étages de troisièmes canaux passant respectivement les uns dans les autres.

5. Procédé selon l'une des revendications précédentes, dans lequel est prise en compte, lors de la détermination de la nouvelle largeur de bande pour un canal client (K₂), au choix, une largeur de bande qui varie de manière flexible ou une largeur de bande constante.

6. Procédé selon l'une des revendications précédentes, dans lequel il est vérifié, dans le cas d'une augmentation de la largeur de bande du canal serveur (K₁), s'il y a encore, dans le réseau de communication (KN), suffisamment de ressources libres pour adapter la largeur de bande du canal serveur (K₁).

7. Produit comprenant des moyens pour exécuter toutes les étapes d'un procédé selon l'une des revendications précédentes relatives au procédé.

8. Produit comprenant des moyens pour exécuter les étapes, provoquées par le produit, d'un procédé selon l'une des revendications précédentes relatives au procédé, lesquelles sont aménagées de manière telle que toutes les étapes du procédé sont exécutées du fait de la coopération avec au moins un autre produit de ce type dont les moyens sont aménagés en vue de l'exécution des étapes restantes du procédé.

9. Produit selon l'une des deux revendications précédentes, lequel se présente sous la forme d'un produit de programme informatique (P) dont le code de programme, pour exécuter le procédé, est exécuté par au moins un processeur.
